# EUROPÄISCHE PATENTSCHRIFT

(11) **EP 1 925 638 B1**
(45) Veröffentlichungstag und Bekanntmachung des Hinweises auf die Patenterteilung: **04.08.2010**
(21) Anmeldenummer: 07119131.6
(22) Anmeldetag: 24.10.2007
(51) Int. Cl.: C08L 67/00, C08L 77/00, C08L 81/00, C08J 3/18, C08L 69/00

(54) **Verwendung eines synthetischen Wachsoxidats als Verarbeitungshilfsmittel für transparente polare Polymere**
Utilisation of a synthetic wax oxidate as a processing aid for transparent polar polymers
Utilisation d'un oxydant cireux synthétique en tant qu'agent auxiliaire de traitement pour polymères polaires transparents

(30) Priorität: 25.11.2006 DE 102006055727
(43) Veröffentlichungstag der Anmeldung: 28.05.2008
(73) Patentinhaber: Evonik Degussa GmbH, 45128 Essen (DE)
(72) Erfinder: Spitzer, Udo, 45721, Haltern am See (DE); Schrenk, Volker, 45701, Herten (DE)

(56) Entgegenhaltungen:
- US-A- 6 046 141

## Beschreibung

Transparente polare Polymere wie Polycarbonat, Polymethylmethacrylat oder transparente Polyamide zeichnen sich durch mechanische Widerstandsfähigkeit, gute Wärmeformbeständigkeit und sehr gute optische Eigenschaften, d. h. insbesondere hohe Transparenz, aus. Deshalb finden sie häufig in Anwendungsbereichen Verwendung, in denen diese besonderen Eigenschaften von besonderem Nutzen sind, beispielsweise in der Produktion von Compact Discs oder DVDs, Brillengläsern, Linsen und anderen optischen Körpern oder Automobilscheinwerfern.

Um die Verarbeitung, insbesondere durch Spritzgießen oder Extrusion, zu vereinfachen, sind Gleit- und Trennmittel als Additive erforderlich, die keinen negativen Einfluss auf die Transparenz haben dürfen. Üblicherweise werden z. B. bei Polycarbonat höhermolekulare Fettsäureester, z. B. Pentaerythrittetrastearat, eingesetzt. Diese zeichnen sich zwar aufgrund der relativ guten Verträglichkeit durch einen nur sehr geringen Einfluss auf die Transparenz aus, ihre Gleit- und Trennwirkung ist allerdings nicht immer befriedigend.

In der US 4,097,435 wird beschrieben, dass glasfaserhaltige Polycarbonatformmassen durch Zusatz von Montanesterwachsen als Trennmittel hergestellt werden können. Die Formmasse enthält vorzugsweise Pigmente, wohl um die Eigenfarbe des Montanesterwachses zu überdecken.

Synthetische Hartparaffine, d. h. Polyethylen- und Fischer-Tropsch-Wachse ohne chemische Funktionalität, werden als Gleit- und Trennmittel bei der Verarbeitung einer großen Zahl unterschiedlicher Kunststoffe verwendet. In transparenten polaren Polymeren wurden diese aber bisher kaum eingesetzt, da sie zwar eine gute Trennwirkung besitzen, jedoch zur Trübung führen, etwa bei transparentem Polycarbonat.

Veresterte Wachsoxidate eignen sich als Gleit- und Trennmittel bei Hart-PVC (EP-A-0 498 417, EP-A-0 170 014 und EP-A-0 172 339). Sie bewirken bei anderen polaren Polymeren, beispielsweise bei Polycarbonat, ebenfalls eine Verringerung des Gleitreibungskoeffizienten und somit eine Verbesserung der Trennwirkung, jedoch führt auch ihr Einsatz hier zu einer deutlichen Eintrübung. Teilverseiftes synthetisches Wachsoxidat führt bereits in Anteilen oberhalb von 0,25 Gew.-% zu einer Gelbfärbung und einer Zersetzung des Polycarbonats bei der Verarbeitung.

In der WO 2005/075190 wird für polare transparente Polymere wie PMMA, Polycarbonat, Polyester, Polyamide, Polyethersulfone, Polyimide und dergleichen eine Vielzahl von Gleitmitteln genannt. Einzelheiten zur Trennwirkung werden nicht angegeben.

US 6,046,141 beschreibt thermoplastische Formmassen mit hoch molekularen Wachsoxidaten.

Die Aufgabe der vorliegenden Erfindung bestand darin, ein Gleit- und Trennmittel zur Verfügung zu stellen, das die gute Trenn- und Gleitwirkung der unfunktionalisierten synthetischen Hartparaffine erreicht, ohne die Transparenz des verarbeiteten polaren Polymeren negativ zu beeinflussen.

Diese Aufgabe wird gelöst durch die Verwendung eines synthetischen Wachsoxidats mit einem zahlenmittleren Molekulargewicht Mₙ, gemessen über Hochtemperatur-GPC gemäß ASTM D 6474-99, im Bereich von 300 bis 1000 g/mol und vorzugsweise im Bereich von 400 bis 800 g/mol sowie einer Säurezahl im Bereich von 15 bis 60 mg KOH/g und vorzugsweise im Bereich von 20 bis 50 mg KOH/g, ermittelt gemäß DIN 53 402, als Verarbeitungshilfsmittel für eine Formmasse, die ein polares Polymeres enthält, wobei das polare Polymere in mindestens 60 % der wiederkehrenden Einheiten mindestens eine Gruppe enthält, die ausgewählt ist aus Estergruppen, Amidgruppen, Sulfongruppen und Imidgruppen. Formmassen, die ein Polymer und 0,05 bis 1,5 Gew.-% eines synthetischen Wachsoxidats gemäß der vorliegenden Erfindung enthalten sowie Formteile, insbesondere solche, die für optische Anwendungen geeignet sind, hergestellt aus der erfindungsgemäßen Formmasse, sind ebenfalls Gegenstand der vorliegenden Erfindung.

Das Wachsoxidat wird der Formmasse im Allgemeinen zu 0,05 bis 1,5 Gew.-%, bevorzugt zu 0,1 bis 1 Gew.-%, besonders bevorzugt zu 0,12 bis 0,8 Gew.-% und ganz besonders bevorzugt zu 0,15 bis 0,6 Gew.-% zugesetzt, wobei die Prozentangaben auf die das Wachsoxidat enthaltende Formmasse bezogen sind.

Die Herstellung synthetischer Wachsoxidate ist Stand der Technik. Sie werden in der Regel durch Einblasen von Luft in geschmolzenes Hartparaffin bei 120 bis 250 °C und insbesondere bei 130 bis 180 °C hergestellt, bevorzugt in Gegenwart eines Metallkatalysators oder eines Impfstoffs, der seinerseits ein Hartparaffin-Oxidat ist. Im Rahmen der Erfindung eignen sich insbesondere synthetische Hartparaffine, die nach dem Fischer-Tropsch-Verfahren hergestellt wurden sowie Polyethylenhartparaffine mit einem geeigneten niedrigen Molekulargewicht von beispielsweise kleiner als 1200 g/mol (Zahlenmittel Mₙ aus Hochtemperatur-GPC gemäß ASTM D 6474-99).

Im polaren Polymeren können die anspruchsgemäßen Gruppen entweder in der Hauptkette oder auf der Hauptkette angeordnet sein. Anspruchsgemäße Polymere mit Estergruppen sind beispielsweise Polycarbonate (Ester der Kohlensäure), Polyestercarbonate, thermoplastische Polyester oder Polyalkyl(meth)acrylate.

Anspruchsgemäße Polymere mit Amidgruppen sind beispielsweise Polyamide, Polyamidimide und Polyesteramide, während anspruchsgemäße Polymere mit Sulfongruppen beispielsweise Polysulfon sein können. Anspruchsgemäße Polymere mit Imidgruppen sind beispielsweise Polyimide, Polyglutarimide und Polyetherimide. Die anspruchsgemäßen Polymeren sind in der Formmasse in der Regel zu mindestens 50 Gew.-%, bevorzugt zu mindestens 60 Gew.-%, besonders bevorzugt zu mindestens 70 Gew.-% und insbesondere bevorzugt zu mindestens 80 Gew.-% enthalten.

Erfindungsgemäß geeignete Polycarbonate enthalten Einheiten, die Kohlensäurediester von Diphenolen sind. Derartige Diphenole können beispielsweise folgende sein: Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren kernalkylierte oder kernhalogenierte Derivate oder auch α,ω-Bis-(hydroxyphenyl)-polysiloxane.

Bevorzugte Diphenole sind beispielsweise 4,4'-Dihydroxybiphenyl, 2,2-Bis-(4-hydroxyphenyl)-propan (Bisphenol A), 1,1-Bis-(4-hydroxyphenyl)-3,3,5-trimethylcyclohexan, 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-Bis-(4-hydroxyphenyl)-p-diisopropylbenzol, 1,3-Bis-[2-(4-hydroxyphenyl)-2-propyl]benzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Die Diphenole können sowohl allein als auch im Gemisch miteinander verwendet werden. Sie sind literaturbekannt oder nach literaturbekannten Verfahren herstellbar (siehe z. B. H. J. Buysch et al., Ullmann's Encyclopedia of Industrial Chemistry, VCH, New York 1991, 5. Ed., Vol. 19, p. 348).

Die erfindungsgemäß eingesetzten Polycarbonate werden nach bekannten Verfahren hergestellt, beispielsweise nach dem Phasengrenzflächenverfahren oder nach dem Schmelzumesterungsverfahren. Sie besitzen Gewichtsmittelmolekulargewichte M_{w} (ermittelt durch Gelpermeationschromatographie und Eichung mit Polystyrolstandard) zwischen 5000 g/mol und 200000 g/mol, vorzugsweise zwischen 10000 g/mol und 80000 g/mol und besonders bevorzugt zwischen 15000 g/mol und 40000 g/mol.

Die Polycarbonatformmasse kann darüber hinaus zu weniger als 50 Gew.-%, bevorzugt zu weniger als 40 Gew.-%, besonders bevorzugt zu weniger als 30 Gew.-% und insbesondere bevorzugt zu weniger als 20 Gew.-%, bezogen auf die gesamte Polymerbasis, andere Polymere enthalten, wie beispielsweise Polyethylenterephthalat, Polybutylenterephthalat, Polyester aus Cyclohexandimethanol, Ethylenglykol und Terephthalsäure, Polyester aus Cyclohexandimethanol und Cyclohexandicarbonsäure, Polyalkyl(meth)acrylate, SAN, Styrol-(Meth)acrylat-Copolymere, Polystyrol (amorph oder syndiotaktisch), Polyetherimide, Polyimide, Polysulfone und/oder Polyarylate (z. B. auf Basis von Bisphenol A und Isophthalsäure/Terephthalsäure).

Polyestercarbonate sind aus mindestens einem Diphenol, aus mindestens einer aromatischen Dicarbonsäure und aus Kohlensäure aufgebaut. Als Diphenole sind die gleichen wie für Polycarbonat geeignet. Der von aromatischen Dicarbonsäuren herrührende Anteil, bezogen auf die Summe der von aromatischen Dicarbonsäuren und von Kohlensäure herrührenden Anteile, beträgt maximal 99,9 Mol-%, maximal 95 Mol-%, maximal 90 Mol-%, maximal 85 Mol-%, maximal 80 Mol-% bzw. maximal 75 Mol-%, während ihr Mindestanteil 0,1 Mol-%, 5 Mol-%, 10 Mol-%, 15 Mol-%, 20 Mol-% oder 25 Mol-% beträgt. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4`-Diphenyletherdicarbonsäure, 4,4`-Diphenylsulfondicarbonsäure, 3,4'-Benzophenondicarbonsäure, 2,2-Bis-(4-carboxyphenyl)-propan und Trimethyl-3-phenylindan-4,5-dicarbonsäure. Hiervon werden bevorzugt Terephthalsäure und/oder Isophthalsäure eingesetzt.

Geeignete thermoplastische Polyester sind vorzugsweise entweder vollaromatisch oder gemischt aliphatisch/aromatisch aufgebaut. Im ersten Fall handelt es sich um Polyarylate; diese leiten sich von Diphenolen und aromatischen Dicarbonsäuren her. Als Diphenole sind die gleichen wie für Polycarbonat geeignet, während als Dicarbonsäure die gleichen wie für Polyestercarbonate geeignet sind. Im zweiten Fall leiten sich die Polyester von einer oder mehreren aromatischen Dicarbonsäuren sowie einem oder mehreren Diolen her; beispielsweise handelt es sich um Polyethylenterephthalat oder um Copolyester aus Terephthalsäure, 1,4-Cyclohexandimethanol und Ethylenglykol.

Als Polyalkyl(meth)acrylate sind in erster Linie solche mit 1 bis 6 C-Atomen in der Kohlenstoffkette des Alkylrestes geeignet, wobei die Methylgruppe als Alkylgruppe bevorzugt ist. Die Polyalkyl(meth)acrylate weisen üblicherweise eine Melt Flow-Rate von 0,5 bis 30 g/10 min, vorzugsweise 0,8 bis 15 g/10 min, auf, gemessen gemäß ISO 1133 bei 230 °C mit einer Belastung von 3,8 kg. Als Beispiele seien u.a. Polymethylmethacrylat und Polybutylmethacrylat genannt. Es können aber auch Copolymere der Polyalkyl(meth)acrylate zum Einsatz kommen. So können bis zu 40 Gew.-%, vorzugsweise bis zu 30 Gew.-% und besonders bevorzugt bis zu 20 Gew.-% des Alkyl(meth)acrylates durch andere Monomere wie z. B. (Meth)acrylsäure, Styrol, Acrylnitril, Acrylamid o.ä. ersetzt sein. Die Formmasse kann schlagzäh eingestellt sein, beispielsweise durch Zusatz eines für derartige Formmassen üblichen Kern/Schale-Kautschuks. Darüber hinaus können zu weniger als 50 Gew.-%, bevorzugt zu maximal 40 Gew.-%, besonders bevorzugt zu maximal 30 Gew.-% und insbesondere bevorzugt zu maximal 20 Gew.-% andere Thermoplaste wie zum Beispiel SAN (Styrol/Acrylnitril-Copolymer) und/oder Polycarbonat enthalten sein.

Geeignete Polyamide sind vorzugsweise solche, die transparent sind; Beispiele hierfür sind
- das Polyamid aus 1,12-Dodecandisäure und 4,4'-Diaminodicyclohexylmethan;
- das Polyamid aus Terephthalsäure und/oder Isophthalsäure und dem Isomerengemisch aus 2,2,4- und 2,4,4-Trimethylhexamethylendiamin,
- das Polyamid aus Isophthalsäure und 1,6-Hexamethylendiamin,
- das Copolyamid aus einem Gemisch aus Terephthalsäure/Isophthalsäure und 1,6-Hexamethylendiamin, gegebenenfalls in Mischung mit 4,4'-Diaminodicyclohexylmethan,
- das Copolyamid aus Terephthalsäure und/oder Isophthalsäure, 3,3'-Dimethyl-4,4'-diaminodicyclohexylmethan und Laurinlactam oder Caprolactam,
- das (Co)Polyamid aus 1,12-Dodecandisäure oder Sebacinsäure, 3,3'-Dimethyl-4,4'-diaminodicyclohexylmethan und gegebenenfalls Laurinlactam oder Caprolactam,
- das Copolyamid aus Isophthalsäure, 4,4'-Diaminodicyclohexylmethan und Laurinlactam oder Caprolactam,
- das Polyamid aus 1,12-Dodecandisäure und 4,4'-Diaminodicyclohexylmethan (bei niedrigem trans,trans-Isomerenanteil),
- das Copolyamid aus Terephthalsäure und/oder Isophthalsäure sowie einem alkylsubstituierten Bis(4-aminocyclohexyl)methan-Homologen, gegebenenfalls in Mischung mit Hexamethylendiamin,
- das Copolyamid aus Bis(4-amino-3-methyl-5-ethyl-cyclohexyl)methan, gegebenenfalls zusammen mit einem weiteren Diamin sowie Isophthalsäure, gegebenenfalls zusammen mit einer weiteren Dicarbonsäure,
- das Copolyamid aus einer Mischung von m-Xylylendiamin und einem weiteren Diamin, z. B. Hexamethylendiamin sowie Isophthalsäure, gegebenenfalls zusammen mit einer weiteren Dicarbonsäure wie z. B. Terephthalsäure und/oder 2,6-Naphthalindicarbonsäure,
- das Copolyamid aus einer Mischung von Bis(4-amino-cyclohexyl)methan und Bis-(4-amino-3-methyl-cyclohexyl)methan sowie aliphatischen Dicarbonsäuren mit 8 bis 14 C-Atomen sowie
- Polyamide oder Copolyamide aus einer Mischung, die 1,14-Tetradecandisäure sowie ein aromatisches, arylaliphatisches oder cycloaliphatisches Diamin enthält.

Diese Beispiele können durch Hinzunahme weiterer Komponenten (z. B. Caprolactam, Laurinlactam oder Diamin/Dicarbonsäure-Kombinationen) oder durch teilweisen oder vollständigen Ersatz von Ausgangskomponenten durch andere Komponenten weitestgehend variiert werden.

Die genannten sowie weitere geeignete weitgehend amorphe Polyamide sowie geeignete Herstellungsmethoden sind unter anderem in folgenden Patentanmeldungen beschrieben: WO 02090421, EP-A-0 603 813, DE-A 37 17 928, DE-A 100 09 756, DE-A 101 22 188, DE-A 196 42 885, DE-A 197 25 617, DE-A 198 21 719, DE-C 198 41 234, EP-A-1 130 059, EP-A 1369 447, EP-A 1 595 907, CH-B-480 381, CH-B-679 861, DE-A-22 25 938, DE-A-26 42 244, DE-A-27 43 515, DE-A- 29 36 759, DE-A- 27 32 928, DE-A- 43 10 970, EP-A-0 053 876, EP-A- 0 271 308, EP-A-0 313 436, EP-A-0 725 100 und EP-A-0 725 101.

Geeignete Polysulfone werden in der Regel durch Polykondensation eines
Bisphenol/Dihalogendiarylsulfon-Gemisches in einem aprotischen Lösemittel in Gegenwart einer Base wie z. B. Natriumcarbonat hergestellt. Als Bisphenol können beispielsweise diejenigen verwendet werden, die auch zur Herstellung von Polycarbonaten geeignet sind, insbesondere jedoch Bisphenol A, 4,4'-Dihyäroxydiphenylsulfon, 4,4'-Dihyäroxydiphenyl und Hydrochinon, wobei auch Gemische aus verschiedenen Bisphenolen eingesetzt werden können. Die Dihalogenverbindung ist in den meisten Fällen 4,4'-Dichlordiphenylsulfon; es kann aber auch jede andere Dihalogenverbindung eingesetzt werden, bei der das Halogen durch eine para-ständige Sulfongruppe aktiviert ist. Als Halogen ist neben Chlor auch Fluor geeignet. Der Begriff "Polysulfon" schließt auch die Polymeren ein, die üblicherweise als "Polyethersulfon" oder "Polyphenylensulfon" bezeichnet werden. Geeignete Typen sind kommerziell erhältlich.

Polyimide werden auf bekannte Weise aus Tetracarbonsäuren oder deren Anhydriden und Diaminen hergestellt. Wenn die Tetracarbonsäure und/oder das Diamin eine Ethergruppe enthält, resultiert ein Polyetherimid. Eine besonders geeignete ethergruppenhaltige Tetracarbonsäure ist die Verbindung I; aus ihr werden zusammen mit aromatischen Diaminen amorphe Polyetherimide erhalten, die kommerziell erhältlich sind.

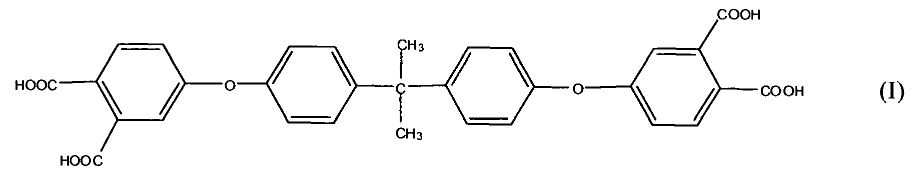

Andere geeignete Polyimide sind Polyglutarimide, manchmal auch als Polyacrylimide oder Polymethacrylimide bezeichnet. Es handelt sich hierbei um Produkte ausgehend von Polyalkylacrylaten bzw. Polyalkylmethacrylaten, bei denen zwei benachbarte Carboxylatgruppen zu einem cyclischen Säureimid umgesetzt worden sind. Die Imidbildung wird vorzugsweise mit Ammoniak bzw. primären Aminen, wie z. B. Methylamin, durchgeführt. Die Produkte sowie ihre Herstellung sind bekannt (Hans R. Kricheldorf, Handbook of Polymer Synthesis, Part A, Verlag Marcel Dekker Inc. New York-Basel-Hongkong, S. 223 f., H. G. Elias, Makromoleküle, Hüthig und Wepf Verlag Basel-Heidelberg-New York; US 2 146 209 A; US 4 246 374).

Bei den anspruchsgemäßen Polymeren können maximal 40 % der wiederkehrenden Einheiten anders zusammengesetzt sein; bei Polykondensaten kann es sich hier beispielsweise um Oxyalkylen- oder Siloxangruppen handeln. Beispielsweise können hier difunktionelle Polyethylenoxid-, Polypropylenoxid-, Polytetrahydrofuran- oder Polydimethylsiloxanblöcke in die Polymerkette eingebaut sein.

Die anspruchsgemäße Formmasse kann weitere gebräuchliche Hilfs- oder Zusatzstoffe enthalten wie z. B. Stabilisatoren, Verarbeitungshilfsmittel, Flammschutzmittel, Weichmacher, Antistatika, isorefraktive Füll- oder Verstärkungsstoffe, isorefraktive Schlagzähmodifikatoren, Farbstoffe, die die Transparenz nicht nennenswert beeinträchtigen, Fließmittel oder andere Polymere, die die Transparenz nicht nennenswert beeinträchtigen. Die Menge aller Hilfs- und Zusatzstoffe beträgt insgesamt maximal 50 Gew.-%, bevorzugt maximal 40 Gew.-%, besonders bevorzugt maximal 30 Gew.-% und insbesondere bevorzugt maximal 20 Gew.-%.

Bei der anspruchsgemäßen Verwendung erzielt man eine beträchtliche Verringerung des Gleitreibungskoeffizienten und damit einhergehend eine erhebliche Verbesserung der Trennwirkung sowie des MFI-Wertes, ohne dass die Transparenz der verarbeiteten Formmasse negativ beeinflusst wird. So weisen erfindungsgemäße Systeme, das heißt mit den erfindungsgemäßen Formmassen hergestellte Formteile, bei einer Schichtdicke von 3,5 mm innerhalb des sichtbaren Spektrums von 380 bis 800 mm in der Transmissionskurve ein Maximum von mindestens 30 % und bevorzugt mindestens 35 %, 40 %, 45 %, 50 %, 55 %, 60 %, 65 %, 70 %, 75 % bzw. 80 % auf, wobei die Transparenz gemäß ASTM D 1003 an spritzgegossenen Platten ermittelt wird.
Überraschenderweise wird darüber hinaus mit dem anspruchsgemäßen Verarbeitungshilfsmittel die Bildung von Belägen auf den Schnecken, Zylindern, Düsen und den Formenoberflächen vermieden. Gleichzeitig werden Artikel mit hervorragender Oberflächenqualität erhalten, sowohl vom optischen Eindruck her als auch im Hinblick auf die Verbundfähigkeit. So müssen beispielsweise optische Linsen mit kratzfesten Schichten versehen werden; CDs und DVDs werden ggf. mit einer Farbstoffschicht sowie mit einer reflektierenden Metallschicht versehen; in anderen Fällen wird eine Schutzschicht oder eine Dekorschicht durch Mehrkomponentenspritzgießen, Hinterspritzen einer Schutz- oder Dekorfolie, Verpressen, Laminieren, Hinterpressen usw. aufgebracht. In allen diesen Fällen wird keine Verringerung der Haftung durch das Verarbeitungshilfsmittel beobachtet.

In einer bevorzugten Ausführungsform werden die erhaltenen Formteile für optische Anwendungen eingesetzt. Beispiele hierfür sind optische Speicher wie CDs und DVDs, Streuscheiben, Scheinwerferscheiben, Scheiben von Heckleuchten, Linsen, Prismen, Brillengläser, Displays, Dekorationsbauteile für Displays, Verscheibungen jeglicher Art sowie Handygehäuse.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich. In den Beispielen und Vergleichsbeispielen wurden folgende Materialien eingesetzt:
PC: ein handelsübliches Polycarbonat (Makrolon^{®} 2808, Bayer Material Science)
PETS (nicht erfindungsgemäß): Pentaerythrit-tetrastearat
Wachs 1 und Wachs 2 (nicht erfindungsgemäß): synthetische Hartparaffine; Daten siehe Tabelle 1
Wachs 3 bis Wachs 7: synthetische Wachsoxidate; Daten siehe Tabelle 1

### Beispiele 1 und 2 sowie Vergleichsbeispiele 1 bis 5:

Aus dem Polycarbonat und 0.4 Gew.-% des Verarbeitungshilfsmittels werden durch Schmelzemischen Compounds hergestellt. Anschließend werden die Compounds mittels Spritzgießen zu Platten verarbeitet (40 mm x 20 mm x 3,5 mm). An diesen Platten wird die Transparenz beurteilt und der Gleitreibungskoeffizient, der Rückschlüsse auf die Trennwirkung zulässt, bestimmt. Die Ergebnisse sind in der Tabelle 1 wiedergegeben. Hierbei wird die Transparenz folgendermaßen beurteilt:

| | |
|---|---|
| + | klar, keine Trübung |
| 0 | einige Schlieren, geringe Trübung |
| 0/- | starke Trübung |
| - | sehr starke Trübung |

Die Beispiele zeigen, dass mit dem anspruchsgemäßen Wachsoxidat die für konventionelle Trennmittel wie PETS typische gute Transparenz erhalten bleibt, jedoch eine deutlich erhöhte Trennwirkung erzielt wird.

| | Verarbeitungshilfsmittel | Mittleres osmometr. Molekulargewicht [g/mol] | Säurezahl [mg KOH/g] | Gleitreibungskoeffizient | Transparenz |
|---|---|---|---|---|---|
| Vergleichsbeispiel 1 | PETS | | | 0,7 | + |
| Vergleichsbeispiel 2 | Wachs 1 | ca. 700 | - | 0,4 | - |
| Vergleichsbeispiel 3 | Wachs 2 | ca. 1000 | - | 0,3 | - |
| Vergleichsbeispiel 4 | Wachs 3 | ca. 650 | 10 | 0,35 | 0/- |
| Beispiel 1 | Wachs 4 | ca. 600 | 30 | 0,3 | + |
| Beispiel 2 | Wachs 5 | ca. 500 | 50 | 0,4 | + |
| Vergleichsbeispiel 5 | Wachs 6 | ca. 1500 | 20 | 0,3 | - |
| Vergleichsbeispiel 6 | Wachs 7 | ca. 1200 | 20 | 0,3 | 0/- |

## Patentansprüche

1. Verwendung eines synthetischen Wachsoxidats mit einem zahlenmittleren Molekulargewicht Mₙ, gemessen über Hochtemperatur-GPC gemäß ASTM D 6474-99, im Bereich von 300 bis 1000 g/mol sowie einer Säurezahl im Bereich von 15 bis 60 mg KOH/g, ermittelt gemäß DIN 53 402, als Verarbeitungshilfsmittel für eine Formmasse, die ein polares Polymer enthält, wobei das polare Polymer in mindestens 60 % der wiederkehrenden Einheiten mindestens eine Gruppe enthält, die ausgewählt ist aus Estergruppen, Amidgruppen, Sulfongruppen und Imidgruppen.

2. Verwendung gemäß Anspruch 2,
**dadurch gekennzeichnet,**
**dass** das mittlere Molekulargewicht des Wachsoxidats im Bereich von 400 bis 800 g/mol liegt.

3. Verwendung gemäß einem oder mehreren der vorhergehenden Ansprüche,
**dadurch gekennzeichnet,**
**dass** die Säurezahl des Wachsoxidats im Bereich von 20 bis 50 mg KOH/g liegt.

4. Verwendung gemäß einem oder mehreren der vorhergehenden Ansprüche,
**dadurch gekennzeichnet,**
**dass** das Wachsoxidat der Formmasse zu 0,05 bis 1,5 Gew.-% zugesetzt wird.

5. Verwendung gemäß einem oder mehreren der vorhergehenden Ansprüche,
**dadurch gekennzeichnet,**
**dass** das Wachsoxidat durch Oxidation eines Fischer-Tropsch-Wachses oder eines Polyethylenhartparaffins hergestellt wurde.

6. Verwendung gemäß einem der vorhergehenden Ansprüche,
**dadurch gekennzeichnet,**
**dass** das polare Polymer ein Polycarbonat, ein Polyestercarbonat, ein thermoplastischer Polyester, ein Polyalkyl(meth)acrylat, ein Polyamid, ein Polyamidimid, ein Polyesteramid, ein Polysulfon, ein Polyimid, ein Polyglutarimid oder ein Polyetherimid ist.

7. Formmasse, die ein Polymer gemäß einem oder mehreren der vorhergehenden Ansprüche sowie 0,05 bis 1,5 Gew.-% eines synthetischen Wachsoxidats gemäß einem oder mehreren der vorhergehenden Ansprüche enthält.

8. Formteil, das für optische Anwendungen geeignet ist, hergestellt aus der Formmasse gemäß Anspruch 7.

9. Formteil gemäß Anspruch 8, **dadurch gekennzeichnet, dass** es bei einer Schichtdicke von 3,5 mm innerhalb des sichtbaren Spektrums von 380 bis 800 mm in der Transmissionskurve ein Maximum von mindestens 30 % und bevorzugt mindestens 35 %, 40 %, 45 %, 50 %, 55 %, 60 %, 65 %, 70 %, 75 % bzw. 80 % aufweist, wobei die Transparenz gemäß ASTM D 1003 an spritzgegossenen Platten ermittelt wird.

## Claims

1. Use of a synthetic wax oxidate having a number-average molecular weight Mₙ as measured via high-temperature GPC to ASTM D 6474-99 in the range from 300 to 1000 g/mol and an acid number in the range from 15 to 60 mg KOH/g as determined to DIN 53 402 as a processing aid for a moulding compound which contains a polar polymer which in at least 60% of the repeating units contains at least one group selected from ester groups, amide groups, sulphone groups and imide groups.

2. Use according to Claim 2, **characterized in that** the average molecular weight of the wax oxidate is in the range from 400 to 800 g/mol.

3. Use according to one or more of the preceding claims, **characterized in that** the acid number of the wax oxidate is in the range from 20 to 50 mg KOH/g.

4. Use according to one or more of the preceding claims, **characterized in that** the wax oxidate is added to the moulding compound at 0.05% to 1.5% by weight.

5. Use according to one or more of the preceding claims, **characterized in that** the wax oxidate has been prepared by oxidizing a Fischer-Tropsch wax or a polyethylene hard paraffin.

6. Use according to any one of the preceding claims, **characterized in that** the polar polymer is a polycarbonate, a polyestercarbonate, a thermoplastic polyester, a polyalkyl (meth)-acrylate, a polyamide, a polyamideimide, a polyesteramide, a polysulphone, a polyimide, a polyglutarimide or a polyetherimide.

7. Moulding compound which contains a polymer according to one or more of the preceding claims and also 0.05% to 1.5% by weight of a synthetic wax oxidate according to one or more of the preceding claims.

8. Moulding suitable for optical applications and produced from the moulding compound according to Claim 7.

9. Moulding according to Claim 8, **characterized in that** within the visible spectrum from 380 to 800 nm at a path length of 3.5 mm it exhibits a maximum in the transmittance curve of at least 30% and preferably at least 35%, 40%, 45%, 50%, 55%, 60%, 65%, 70%, 75% or 80%, the transparency being determined to ASTM D 1003 on injection-moulded sheets.

## Revendications

1. Utilisation d'un produit d'oxydation de cire synthétique ayant une masse moléculaire moyenne en nombre Mₙ, mesurée par GPC à haute température selon ASTM D 6474-99, dans la plage de 300 à 1 000 g/mole ainsi qu'un indice d'acide dans la plage de 15 à 60 mg de KOH/g, déterminé selon DIN 53 402, en tant qu'adjuvant de mise en oeuvre pour une matière à mouler qui contient un polymère polaire, le polymère polaire contenant dans au moins 60 % des motifs répétitifs au moins un groupe qui est choisi parmi des groupes ester, des groupes amido, des groupes sulfo et des groupes imido.

2. Utilisation selon la revendication 2, **caractérisée en ce que** la masse moléculaire moyenne du produit d'oxydation de cire se situe dans la plage allant de 400 à 800 g/mole.

3. Utilisation selon une ou plusieurs des revendications précédentes, **caractérisée en ce que** l'indice d'acide du produit d'oxydation de cire se situe dans la plage allant de 20 à 50 mg de KOH/g.

4. Utilisation selon une ou plusieurs des revendications précédentes, **caractérisée en ce que** le produit d'oxydation de cire est ajouté à raison de 0,05 à 1,5 % en poids à la matière à mouler.

5. Utilisation selon une ou plusieurs des revendications précédentes, **caractérisée en ce que** le produit d'oxydation de cire a été préparé par oxydation d'une cire de Fischer-Tropsch ou d'une paraffine dure de polyéthylène.

6. Utilisation selon une ou plusieurs des revendications précédentes, **caractérisée en ce que** le polymère polaire est un polycarbonate, un polyestercarbonate, un polyester thermoplastique, un poly[(méth)acrylate d'alkyle], un polyamide, un polyamide-imide, un polyesteramide, une polysulfone, un polyimide, un polyglutarimide ou un polyétherimide.

7. Matière à mouler, qui contient un polymère selon une ou plusieurs des revendications précédentes ainsi que 0,05 à 1,5 % en poids d'un produit d'oxydation de cire synthétique selon une ou plusieurs des revendications précédentes.

8. Pièce moulée, qui est appropriée à des applications optiques, produite à partir de la matière à mouler selon la revendication 7.

9. Pièce moulée selon la revendication 8, **caractérisée en ce qu'**elle présente en une épaisseur de couche de 3,5 mm, dans le spectre visible de 380 à 800 nm, un maximum d'au moins 30 % et de préférence d'au moins 35 %, 40 %, 45 %, 50 %, 55 %, 60 %, 65 %, 70 %, 75 % ou 80 % dans la courbe de transmission, la transparence étant déterminée selon ASTM D 1003 sur des plaques moulées par injection.
